# EUROPÄISCHE PATENTSCHRIFT

(11) **EP 3 411 913 B1**
(45) Veröffentlichungstag und Bekanntmachung des Hinweises auf die Patenterteilung: **29.04.2020**
(21) Anmeldenummer: 17700054.4
(22) Anmeldetag: 04.01.2017
(51) Int. Cl.: H01M 10/04, H01M 10/0525, H01M 2/10

(54) **BATTERIEMODUL MIT EINER MEHRZAHL AN BATTERIEZELLEN, VERFAHREN ZU DESSEN HERSTELLUNG UND BATTERIE**
BATTERY MODULE HAVING A PLURALITY OF BATTERY CELLS, METHOD FOR THE PRODUCTION THEREOF, AND BATTERY
MODULE DE BATTERIE POURVU D'UNE PLURALITÉ D'ÉLÉMENTS DE BATTERIE, PROCÉDÉ DE FABRICATION ET BATTERIE

(30) Priorität: 03.02.2016 DE 102016201604
(43) Veröffentlichungstag der Anmeldung: 12.12.2018
(73) Patentinhaber: Robert Bosch GmbH, 70442 Stuttgart (DE)
(72) Erfinder: RIEDMANN, Matthias, 70188 Stuttgart (DE); KOHN, Peter, 70178 Stuttgart (DE); HAFENBRAK, Robert, 70469 Stuttgart (DE); GREINER, Daniel, Bernd, 72070 Tuebingen (DE); WAGNER, Christian, 70469 Stuttgart (DE)
(86) Internationale Anmeldenummer: PCT/EP2017/050126
(87) Internationale Veröffentlichungsnummer: WO 2017/133859

(56) Entgegenhaltungen:
- JP-A- 2013 004 294
- JP-A- 2014 192 094
- US-A1- 2012 112 393
- US-A1- 2013 130 086

## Beschreibung

### Stand der Technik

Die Erfindung geht aus von einem Batteriemodul mit einer Mehrzahl an Batteriezellen und einem Verfahren zu dessen Herstellung nach Gattung der unabhängigen Ansprüche. Gegenstand der vorliegenden Erfindung ist auch eine Batterie mit einem solchen Batteriemodul.

Aus dem Stand der Technik ist bekannt, dass Batterien, wie insbesondere Lithium-Ionen-Batterien, wenigstens aus einem Batteriemodul oder vorteilhaft auch aus einer Mehrzahl an Batteriemodulen bestehen. Weiterhin weist ein Batteriemodul zudem bevorzugt eine Vielzahl an einzelnen Batteriezellen auf, welche untereinander zu dem Batteriemodul verschaltet sind. Dabei können die einzelnen Batteriezellen seriell oder parallel miteinander verschaltet sein.

Alterungsprozesse aufgrund von Lade- und Entladevorgängen in den einzelnen Batteriezellen bedingen interne Kräfte, welche dazu führen, dass die einzelnen Batteriezellen während der Betriebsdauer nicht formkonstant bleiben, sondern diese als Schwellung bezeichneten Prozesse deformieren das Gehäuse der Batteriezellen. Diese Prozesse erfordern somit eine Ausbildung des Batteriemoduls, welche die aufgrund von Alterungsprozessen entstehenden internen Kräfte aufnehmen kann und die Verformung der Gehäuse der einzelnen Batteriezellen begrenzen kann. Die Beaufschlagung der einzelnen Batteriezellen oder deren Gehäuse mit einer Kraft, um die Verformung zu begrenzen, wird allgemein als Verpressung bezeichnet. Die Alterungsgeschwindigkeit der einzelnen Batteriezellen wird insbesondere durch die zu deren Verpressung aufgewandte Kraft bestimmt, wobei die Alterungsgeschwindigkeit in technisch relevanten Betriebsbereichen mit steigender Verpresskraft zunimmt.

Des Weiteren erwärmen sich die einzelnen Batteriezellen während des Betriebes aufgrund ihres Innenwiderstandes bei einem elektrischen Stromfluss. Dabei weisen die Batteriezellen eines Batteriemoduls eine inhomogene Temperaturverteilung auf, wobei Batteriezellen in der Mitte eines Batteriemoduls eine höhere Temperatur aufweisen aufgrund der im Vergleich zu sich am Rand eines Batteriemoduls befindlichen Batteriezellen schlechteren Möglichkeit der Wärmeabführung. Die Alterungsgeschwindigkeit der einzelnen Batteriezellen wird insbesondere auch durch deren Temperatur bestimmt, wobei die Alterungsgeschwindigkeit mit steigender Temperatur zunimmt. Da Batteriezellen mit zunehmender Temperatur schneller altern, weist ein Batteriemodul mit einer inhomogenen Temperaturverteilung auch eine inhomogene Verteilung der Alterungsgeschwindigkeit auf, welche dazu führen kann, dass die Lebensdauer des gesamten Batteriemoduls verringert wird, denn die Lebensdauer eines Batteriemoduls wird durch die am schnellsten alternde Batteriezelle bestimmt.

Aus dem Stand der Technik ist es insbesondere aus der US 2014/0023893 bekannt, dass Batteriezellen zwischen zwei Trennwänden angeordnet sind, wobei die einzelnen Trennwände elastische Elemente zur Bestimmung der Elastizität einer einzelnen Trennwand aufweisen.

Weiterhin ist es aus der US 2013/0252063 bekannt, Trennwände, welche zwischen zwei Batteriezellen angeordnet sind, derart auszubilden, dass diese Bereiche unterschiedlicher Elastizität aufweisen, um der Verformung der Batteriezellen entgegen wirken zu können.

US 2012/112393 offenbart ein Batteriemodul, welches eine Mehrzahl an prismatischen Batteriezellen enthält, wobei diese Batteriezellen durch Ausgleichselemente voneinander getrennt sind, welche aus zwei Platten und mehreren die Platten kontaktierenden nicht-linearen Federelementen bestehen.

JP 2014 192094 offenbart ein Batteriemodul, welches eine Mehrheit an prismatischen Batteriezellen, Trennwänden und Ausgleichselementen enthält, wobei diese Ausgleichselemente aus einer Shape-Memory-Legierung bestehen.

### Offenbarung der Erfindung

Das Batteriemodul mit einer Mehrzahl an Batteriezellen und das Verfahren zu dessen Herstellung haben den Vorteil, dass eine erste Batteriezelle und eine zweite Batteriezelle mit einer unterschiedlichen Kraft verpresst werden können. Hierbei kann die Kraft, mit der eine einzelne Batteriezelle verpresst wird, durch den Wert einer Verformungskonstanten eines Ausgleichselementes eingestellt werden. Dadurch ist es möglich, die Alterungsgeschwindigkeit einzelner Batteriezellen über die zu deren Verpressung aufgewandte Kraft zu beeinflussen. Insbesondere können somit durch eine unterschiedliche Verpresskraft unterschiedliche Alterungsgeschwindigkeiten aufgrund unterschiedlicher Temperaturen der einzelnen Batteriezellen ausgeglichen werden, wodurch die Alterungszustände der Batteriezellen insgesamt einander angeglichen werden können.

Erfindungsgemäß wird ein Batteriemodul mit einer Mehrzahl an Batteriezellen zur Verfügung gestellt, wobei die Batteriezellen insbesondere Lithium-Ionen-Batteriezellen sind. Das Batteriemodul weist eine Mehrzahl an Trennwänden auf, wobei zwischen zwei Trennwänden eine Batteriezelle angeordnet ist. Dabei ist zwischen einer ersten Batteriezelle und einer zu der ersten Batteriezelle benachbarten Trennwand ein erstes Ausgleichselement angeordnet. Weiterhin ist zwischen einer zweiten Batteriezelle und einer zu der zweiten Batteriezelle benachbarten Trennwand ein zweites Ausgleichselement angeordnet. Das erste Ausgleichselement und das zweite Ausgleichelement weisen hierbei einen unterschiedlichen Wert einer Verformungskonstanten auf.

Durch die in den abhängigen Ansprüchen aufgeführten Maßnahmen sind vorteilhafte Weiterbildungen und Verbesserungen der im unabhängigen Anspruch angegebenen Vorrichtung oder des im unabhängigen Anspruch angegeben Verfahrens möglich.

Von Vorteil ist es, wenn das Ausgleichselement, welches zwischen einer Batteriezelle und einer Trennwand angeordnet ist, in der Art ausgebildet ist, dass der Wert einer Verformungskonstanten über das gesamte Ausgleichselement hinweg konstant ist. Insbesondere soll darunter verstanden sein, dass das Ausgleichselement keine Bereiche unterschiedlicher Verformungswiderstände aufweist. Weiterhin ist es selbstverständlich aber auch möglich, dass das Ausgleichselement Bereiche unterschiedlicher Verformungswiderstände umfasst, um insbesondere das Ausdehnungsverhalten der einzelnen Batteriezellen zu berücksichtigen, die sich allgemein in einem mittleren Bereich einer Seitenfläche verstärkt ausdehnen.

Es ist zweckmäßig, dass zwei Trennwände in der Art durch ein Verspannelement miteinander verbunden sind, dass eine Kraft zum Verpressen einer zwischen den zwei Trennwänden angeordneten Batteriezelle von den zwei Trennwänden auf die Batteriezelle übertragen wird. Weiterhin ist es auch zweckmäßig, dass das Batteriemodul zumindest einen zwei Trennwände umfassenden Aufnahmeraum ausbildet. Dabei sind die zwei Trennwände eines Aufnahmeraumes für die Batteriezelle durch zumindest eine weitere Gehäusewand miteinander verbunden. Bevorzugt ist der Aufnahmeraum für die Batteriezelle in der Art ausgebildet, dass dieser neben den zwei Trennwänden auch zwei Seitenwände und einen Boden umfasst, dadurch kann die Batteriezelle über die verbleibende Öffnung in den Aufnahmeraum eingesetzt werden, wobei die verbleibende Öffnung bevorzugt durch ein Deckelelement verschließbar ist, um den Aufnahmeraum gegenüber einer Umgebung abzuschließen.
Die zwei Trennwände, zwischen denen eine Batteriezelle angeordnet ist, sind sowohl bei einer Verbindung durch ein Verspannelement als auch bei einer Ausbildung als Teil eines Aufnahmeraumes durch einen Abstand voneinander beabstandet angeordnet, welcher bevorzugt konstant ist.

Die insbesondere aus der Verbindung der zwei Trennwände resultierende Konstanz des Abstandes sorgt dafür, dass eine Kraft zum Verpressen der Batteriezelle von den zwei Trennwänden übertragen werden kann. Die auf den Lade- und Entladevorgängen der Batteriezelle beruhenden Ausdehnungsvorgänge bewirken Kräfte, die von der Batteriezelle jeweils insbesondere in Richtung der zwei Trennwände zeigen und versuchen den Abstand der zwei Trennwände zu vergrößern. Da der Abstand aufgrund der Verbindung der zwei Trennwände konstant ist oder nur zumindest teilweise variabel ist, können von den zwei Trennwänden somit den auf der Ausdehnung beruhenden Kräften entgegenwirkende Kräfte aufgebracht werden, wodurch die Batteriezelle letztlich verpresst wird. Da zumindest zwischen einer zu einer Batteriezelle benachbarten Trennwänden und der Batteriezelle ein Ausgleichselement angeordnet ist, verformen die auf den Ausdehnungsvorgängen der Batteriezelle beruhenden Kräfte auch das Ausgleichselement, welches dadurch eine der Verformung entgegenwirkende Kraft, die somit auch der Ausdehnung der Batteriezelle entgegenwirkt, erzeugt. Die zur Verformung des Ausgleichselementes benötigte Kraft ist von dem Wert der Verformungskonstanten des Ausgleichelements abhängig. Durch den Wert der Verformungskonstanten kann somit die Verpresskraft beeinflusst werden. Dabei gilt, dass je größer der Wert der Verformungskonstanten des Ausgleichelements ist, desto mehr Kraft notwendig ist, um dieses zu verformen und dass somit eine umso größere Kraft die Batteriezelle verpresst.

Es ist zweckmäßig, wenn zwei benachbarte Trennwände jeweils mit ihren größten Seitenflächen in einer Längsrichtung des Batteriemoduls parallel benachbart zueinander und durch einen Abstand voneinander beabstandet angeordnet sind. Dabei sind die Batteriezellen, welche jeweils zwischen zwei Trennwänden angeordnet sind, bevorzugt prismatisch ausgebildet und des Weiteren nebeneinander in der Längsrichtung des Batteriemoduls mit ihren größten Seitenflächen benachbart zueinander angeordnet. Dadurch ist es möglich, dass eine zuverlässige Verpressung der Batteriezellen möglich ist, da die Trennwände mit ihren größten Seitenflächen benachbart zu den größten Seitenflächen der Batteriezellen angeordnet sind und damit eine sichere Übertragung der Verpresskräfte für eine Verpressung gewährleisten.

Von Vorteil ist es, wenn die Verformungskonstante eine Federkonstante, ein Elastizitätsmodul, ein Kompressionsmodul oder eine Viskosität ist. Des Weiteren ist es auch möglich, dass die Verformungskonstante eine geometrische Größe beschreibt. Beispielsweise kann die geometrische Größe eine Längenerstreckung des Ausgleichselement in der Längsrichtung des Batteriemoduls sein. Mit anderen Worten ausgedrückt bedeutet dies, dass die geometrische Größe den Abstand zwischen der zur Kontaktierung der Batteriezelle ausgebildeten Seitenfläche des Ausgleichselements und der zur Kontaktierung der Trennwand ausgebildeten Seitenfläche des Ausgleichselements beschreibt. Eine Möglichkeit der Realisierung einer Vergrößerung der Längenerstreckung des Ausgleichelements in der Längsrichtung des Batteriemoduls ist beispielsweise auch die Anordnung von mehreren, insbesondere zwei, Ausgleichselementen anstatt nur einem Ausgleichselement.

Bevorzugt weist das Batteriemodul eine Mehrzahl an Ausgleichselementen auf, welche jeweils zwischen einer Trennwand und einer Batteriezelle angeordnet sind, wobei zwischen einer Trennwand und einer Batteriezelle bevorzugt nur ein Ausgleichselement angeordnet ist, es aber weiterhin wie eben beschrieben, auch möglich ist, mehrere Ausgleichselemente mit insbesondere jeweils unterschiedlicher Verformungskonstante zwischen einer Trennwand und einer Batteriezelle anzuordnen, um den Wert der Verformungskonstanten zu verändern.

Insbesondere ist es vorteilhaft, wenn sowohl zwischen der einen Trennwand der zwei Trennwände, zwischen denen die Batteriezelle angeordnet ist, und der Batteriezelle als auch zwischen der anderen Trennwand der zwei Trennwände, zwischen denen die Batteriezelle angeordnet ist, und der Batteriezelle jeweils bevorzugt zumindest ein Ausgleichselement angeordnet ist, wobei die zwei so zu der Batteriezelle benachbarten Ausgleichselemente bevorzugt den gleichen Wert einer Verformungskonstanten aufweisen. Weiterhin ist es aber auch möglich, dass diese einen unterschiedlichen Wert einer Verformungskonstanten aufweisen. Bevorzugt ist jeweils zwischen einer Trennwand und einer Batteriezelle zumindest ein Ausgleichselement angeordnet, so dass jede Batteriezelle zwei Ausgleichselemente kontaktiert.

Erfindungsgemäß weist das Batteriemodul weiterhin in einer Längsrichtung einen ersten Bereich und einen zweiten Bereich auf. Dabei ist das Batteriemodul in der Art ausgebildet, dass die Werte der Verformungskonstanten der Ausgleichselemente in dem ersten Bereich in der Längsrichtung des Batteriemoduls abnehmen und/oder in dem zweiten Bereich in der Längsrichtung des Batteriemoduls zunehmen. Dadurch nimmt in dem ersten Bereich in der Längsrichtung des Batteriemoduls die Kraft ab, mit der die einzelnen in der Längsrichtung des Batteriemoduls nebeneinander angeordneten Batteriezellen verpresst werden. Weiterhin nimmt in dem zweiten Bereich in der Längsrichtung des Batteriemoduls die Kraft zu, mit der die einzelnen in der Längsrichtung des Batteriemoduls nebeneinander angeordneten Batteriezellen verpresst werden. Da die Alterungsgeschwindigkeit der Batteriezellen von der Verpresskraft abhängig ist, kann somit eine inhomogene auf der Verpressung beruhende Verteilung der Alterungsgeschwindigkeit erzeugt werden. Das Batteriemodul weist in der Längsrichtung ein erstes Ende und zweites Ende auf, wobei mit dem ersten Ende bzw. dem zweiten Ende jeweils eine sich am äußeren Rand des Batteriemoduls befindliche Batteriezelle beschrieben sein soll. Weiterhin weist das Batteriemodul in der Längsrichtung eine mittlere Position auf, welche sich insbesondere genau in der Mitte zwischen dem ersten Ende und dem zweiten Ende befindet. Bevorzugt umfasst der erste Bereich den Bereich zwischen dem ersten Ende und der mittleren Position des Batteriemoduls und der zweite Bereich umfasst den Bereich zwischen der mittleren Postion und dem zweiten Ende des Batteriemoduls.

Zweckmäßigerweise ist der erste Bereich und der zweite Bereich in der Art angepasst, dass während des Betriebes die Temperatur der einzelnen Batteriezellen in dem ersten Bereich in der Längsrichtung zunimmt und/oder in dem zweiten Bereich in der Längsrichtung abnimmt. Dadurch kann eine homogenere Verteilung der Alterungszustände der einzelnen Batteriezellen ermöglicht werden, weil die höhere Temperaturen aufweisenden Batteriezellen mit einer geringeren Kraft verpresst werden, als Batteriezellen mit einer vergleichsweise dazu niedrigeren Temperatur. Somit kann die insbesondere aufgrund unterschiedlicher Möglichkeiten der Wärmeabfuhr auftretende inhomogene Alterung, welche durch eine inhomogene Temperaturverteilung verursacht wird, mittels einer inhomogenen Verpressung, welche auf unterschiedlichen Verformungskonstanten der Ausgleichselemente beruht, ausgeglichen werden.

Ferner betrifft die Erfindung eine Batterie mit einem eben beschriebenen Batteriemodul.

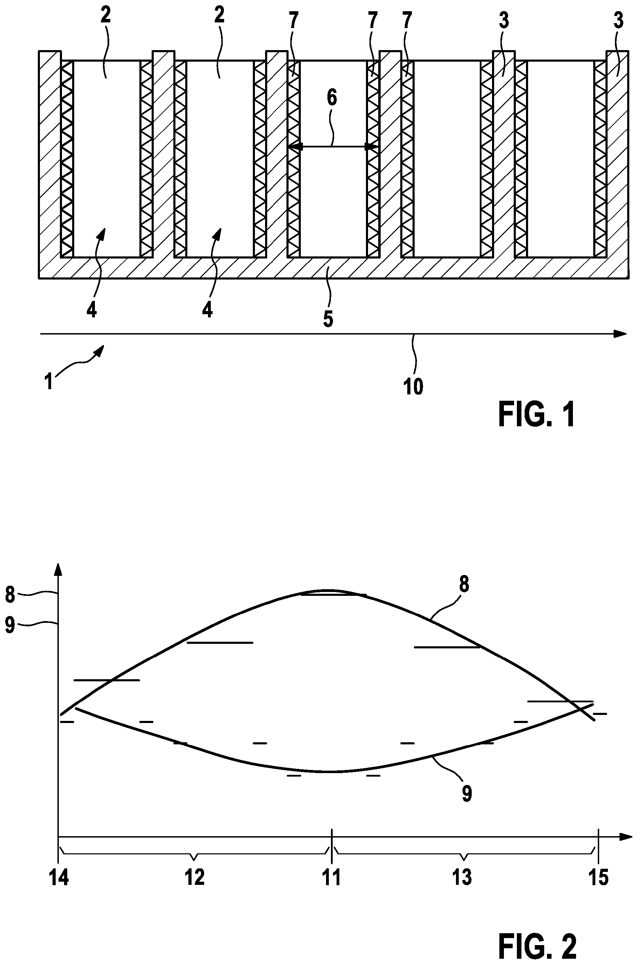

Erfindungsgemäß wird auch ein Verfahren zur Herstellung eines eben beschriebenen Batteriemoduls zur Verfügung gestellt. Dabei wird in einem ersten Schritt für jede Batteriezelle eine Temperatur bestimmt, welche diese während des Betriebes des Batteriemoduls aufweisen wird. Diese Bestimmung kann sowohl durch experimentelle Versuche als auch durch numerische Simulationen erfolgen. Weiterhin ist es auch möglich diese Temperaturverteilung während des Betriebes zu bestimmen. Insbesondere kann dabei als erste Nährung zugrunde gelegt werden, dass Batteriezellen in der Mitte des Batteriemoduls eine höhere Temperatur aufweisen werden, als Batteriezellen am Rand des Batteriemoduls, wobei Figur 2 exemplarisch einen Temperaturverlauf der Batteriezellen über der Längsrichtung des Batteriemoduls zeigt.
In einem zweiten Schritt werden die Ausgleichselemente in dem Batteriemodul nun derart angeordnet, dass ein Ausgleichselement einen kleineren Wert einer Verformungskonstanten im Vergleich zu einem in der Längsrichtung des Batteriemoduls vorhergehenden Ausgleichselements aufweist, wenn die bestimmte Temperatur einer Batteriezelle, welche zwischen denselben zwei Trennwänden angeordnet ist wie das Ausgleichselement, größer ist als die Temperatur einer Batteriezelle, welche zwischen denselben zwei Trennwänden angeordnet ist wie das vorhergehende Ausgleichselement.
Weiterhin werden in dem zweiten Schritt die Ausgleichselemente in dem Batteriemodul derart angeordnet, dass ein Ausgleichselemente einen größeren Wert einer Verformungskonstanten im Vergleich zu einem in der Längsrichtung des Batteriemoduls vorhergehenden Ausgleichselement aufweist, wenn die bestimmte Temperatur einer Batteriezelle, welche zwischen denselben zwei Trennwänden angeordnet ist wie das Ausgleichselement, kleiner ist als die Temperatur einer Batteriezelle, welche zwischen denselben zwei Trennwänden kann das vorhergehende Ausgleichselement.
Dadurch kann eine inhomogene Alterung der Batteriezellen, welche auf einer inhomogenen Temperaturverteilung beruht, mittels einer inhomogenen Verteilung der Verpresskraft zumindest teilweise ausgeglichen werden.

### Kurze Beschreibung der Zeichnungen

Ausführungsbeispiele der Erfindung sind in den Zeichnungen dargestellt und in der nachfolgenden Beschreibung näher erläutert.

Es zeigen
Figur 1 schematisch eine Ausführungsform eines erfindungsgemäßen Batteriemoduls in einer Seitenansicht und
Figur 2 exemplarisch einen Temperaturverlauf der Batteriezellen während des Betriebes und einen Verlauf der Werte der Verformungskonstanten der Ausgleichselemente über der Längsrichtung des Batteriemoduls.

Die Figur 1 zeigt schematisch eine Ausführungsform eines erfindungsgemäßen Batteriemoduls 1 in einer Seitenansicht.

Das Batteriemodul 1 weist eine Mehrzahl an Batteriezellen 2 auf, wobei das in Figur 1 gezeigte Batteriemodul 1 insbesondere fünf Batteriezellen 2 aufweist. Weiterhin weist das Batteriemodul 1 auch eine Mehrzahl an Trennwänden 3 auf, welche, wie aus der Figur 1 zu erkennen ist, zwischen jeweils zwei Batteriezellen 2 angeordnet sind. Dadurch ist eine Trennwand 3 benachbart zu zwei Batteriezellen 2 angeordnet. Dabei weist das Batteriemodul 1 weiterhin zwei endständige Trennwände 3 auf, welche auch als Endplatten bezeichnet sein können. Die endständigen Trennwände 3 bzw. Endplatten sind jeweils nur benachbart zu einer Batteriezelle 2 angeordnet und daher auch, wie aus der Figur 1 zu erkennen ist, nicht zwischen jeweils zwei Batteriezellen 2 angeordnet.

Bei dem in der Figur 1 gezeigten Batteriemodul 1 bildet das Batteriemodul 1 eine Mehrzahl an Aufnahmeräumen 4 aus, wobei einer der Aufnahmeräume 4 jeweils zwei Trennwände 3 umfasst. Weiterhin weist das Batteriemodul 1 einen Boden 5 auf und zwei in der Figur 1 nicht gezeigte Seitenwände, welche jeweils bevorzugt rechtwinkling zu den zwei Trennwänden 2 und dem Boden 5 angeordnet sind. Dabei bildet der Boden 5 zusammen mit den zwei Seitenwänden und jeweils zwei Trennwänden 3 einen Aufnahmeraum 4 aus. Der Boden 5, die hier nicht gezeigten Seitenwände und die zwei Trennwände 3 bilden bevorzugt eine Mehrzahl an so unverformbaren Aufnahmeräumen 4 aus, dass diese während des Betriebes des Batteriemoduls 1 durch auf einer Ausdehnung der Batteriezellen 2 beruhende Kräfte nicht verformt werden können. Dadurch bleibt ein Abstand 6 zwischen den zwei Trennwänden 3 während des Betriebes auch konstant.

An dieser Stelle sei angemerkt, dass eine Trennwand 3 somit an der Ausbildung von zwei Aufnahmeräumen 4 beteiligt ist. Lediglich die endständigen Trennwände 3 bzw. Endplatten sind an der Ausbildung nur eines Aufnahmeraumes 4 beteiligt.

Die Figur 1 zeigt weiterhin, dass eine Batteriezelle 2 zwischen zwei Trennwänden 3 angeordnet ist. Insbesondere ist dabei eine Batteriezelle 2 in einem Aufnahmeraum 4 aufgenommen. Bevorzugt sind die Batteriezellen 2 und die Trennwände 3 alternierend angeordnet, wobei es durchaus auch möglich ist, mehr als eine Batteriezelle 2 in einem Aufnahmeraum 4 aufzunehmen, so dass bei der alternierenden Anordnung eine Trennwand 3 stets auf eine Batteriezelle 2 folgt.

Zumindest ist zwischen einer Batteriezelle 2 und einer zu dieser Batteriezelle 2 benachbarten Trennwand 3 ein Ausgleichselement 7 angeordnet. Bevorzugt ist es, dass zwischen einer Batteriezelle 2 und beiden zu dieser Batteriezelle 2 benachbarten Trennwänden 3 jeweils ein Ausgleichselement 7 angeordnet ist. Bei dem in Figur 1 gezeigten Ausführungsbeispiel eines Batteriemoduls 1 ist eine Batteriezelle 2 somit zwischen zwei Ausgleichselementen 7 und direkt kontaktierend mit diesen angeordnet. Weiterhin sind die Ausgleichselemente 7 auf der der Batteriezelle 2 abgewandten Seitenfläche jeweils insbesondere direkt kontaktierend mit den jeweiligen Trennwänden 3 angeordnet.

Während des Betriebes des Batteriemoduls 1 bedingen Lade- und Entladevorgänge der Batteriezellen 2 Ausdehnungsvorgänge, welche zu Kräften führen, die auf die Trennwände 3 in von der Batteriezelle 2 abgewandter Richtung zeigen. Da die Aufnahmeräume 4 derart ausgebildet sind, dass diese während des Betriebes formkonstant bleiben, können die Trennwände 3 der Verformung entgegen wirken und somit eine Verpresskraft übertragen. Da zwischen den Trennwänden 3 und der Batteriezellen 2 weiterhin noch Ausgleichselemente 7 angeordnet sind, bewirken die Ausdehnungsvorgänge auch eine Verformung des Ausgleichelements 7, wobei eine Verformungskonstante des Ausgleichelements 7 den Verformungswiderstand desselbigen bestimmt und damit auch die der Ausdehnung entgegenwirkende Kraft und somit letztlich die Verpresskraft.

Die Figur 2 zeigt exemplarisch einen Temperaturverlauf der Batteriezellen 2 über der mit dem Bezugszeichen 10 bezeichneten Längsrichtung des Batteriemoduls 1. Dazu ist die Temperatur 8 der einzelnen Batteriezellen 2 des in Figur 1 gezeigten Batteriemoduls 1 über dessen Längsrichtung 10 dargestellt. Dabei ist zu erkennen, dass Batteriezellen 2 in einer mittleren Position eine höhere Temperatur 8 aufweisen als Batteriezellen 2 am Rand des Batteriemoduls 10. Dies begründet sich durch die schlechteren Möglichkeiten der Wärmeabfuhr und die stärkere Erwärmung durch benachbarte Batteriezellen 2. Näherungsweise kann dem gezeigten Verlauf der Temperatur 8 ein parabelförmiger Charakter unterstellt werden, wobei der Scheitel in einer mittleren Position 11 der Längsrichtung 10 des Batteriemoduls 1 liegt.

Die durch den Temperaturverlauf der Figur 2 veranschaulichte inhomogene Temperaturverteilung eines Batteriemoduls 1 bedingt auch eine inhomogene Verteilung der Alterungsgeschwindigkeiten der Batteriezellen 2, welche dazu führt, dass Batteriezellen 2 mit einer höheren Temperatur 8 schneller altern. Dieser temperaturbedingten inhomogenen Verteilung der Alterungsgeschwindigkeit soll durch eine Anpassung der Werte der Verformungskonstanten der Ausgleichselemente 7 entgegengewirkt werden. Da Batteriezellen 2 mit zunehmender Verpresskraft schneller altern, sollen Batteriezellen 2 mit einer höheren Temperatur 8 mit einer geringeren Verpresskraft verpresst werden als Batteriezellen mit einer dazu vergleichsweise niedrigeren Temperatur 8. Somit kann eine homogenere Verteilung der Alterung erreicht werden.

Die Figur 2 zeigt dazu weiterhin exemplarisch eine Verteilung der Werte 9 der Verformungskonstanten der Ausgleichselemente 7. Dazu ist der Wert 9 der Verformungskonstanten der Ausgleichselemente 7 für das in der Figur 1 gezeigte Batteriemodul 1 über der Längsrichtung 10 des Batteriemoduls 1 dargestellt. Die Längsrichtung 10 des Batteriemoduls 1 weist einen ersten Bereich 12 auf, welcher vorzugsweise den Bereich von einem Ende 14 des Batteriemoduls 1 zu der mittleren Position 11 umfasst. Wie die Figur 2 zeigt, nimmt die Temperatur 8 der einzelnen Batteriezellen 2 in der Längsrichtung 10 des Batteriemoduls in dem ersten Bereich 12 von dem einen Ende 14 zu der mittleren Position 11 hin zu, wobei um eine homogenere Verteilung der Alterungszustände zu erreichen, somit die Verpresskraft, mit der die einzelnen Batteriezellen 2 verpresst werden, in dem ersten Bereich 12 in der gezeigten Längsrichtung 10 abnehmen soll. Daher sind die Verformungskonstanten der Ausgleichselemente 7 in dem ersten Bereich 12 in der Art an den Temperaturverlauf angepasst, dass die Werte 9 der Verformungskonstanten in dem ersten Bereich 12 in der gezeigten Längsrichtung 10 abnehmen. Weiterhin weist sie Längsrichtung 10 des Batteriemoduls 1 einen zweiten Bereich 13 auf, welcher den Bereich von der mittleren Position 11 bis zu einem anderen Ende 15 des Batteriemoduls 1 umfasst. Wie die Figur 2 zeigt, nimmt die Temperatur 8 der einzelnen Batteriezellen 2 in der Längsrichtung 10 von der mittleren Position 11 zu dem anderen Ende 15 hin ab, wobei, um eine homogenere Verteilung der Alterungszustände zu erreichen, somit die Verpresskraft, mit der die einzelnen Batteriezellen 2 verpresst werden, in dem zweiten Bereich 13 in der gezeigten Längsrichtung 10 zunehmen soll. Daher sind die Verformungskonstanten der Ausgleichselemente 7 in dem zweiten Bereich 13 derart an den Temperaturverlauf angepasst, dass die Werte 9 der Verformungskonstanten in dem zweiten Bereich 13 in der gezeigten Längsrichtung 10 zunehmen.
Dabei ist zu erkennen, dass die Werte 9 der Verformungskonstanten von Ausgleichselementen 7, welche kontaktierend mit derselben Batteriezelle 2 angeordnet sind, bevorzugt identisch sind.

## Patentansprüche

1. Batteriemodul mit einer Mehrzahl an Batteriezellen, insbesondere Lithium-Ionen-Batteriezellen,
aufweisend eine Mehrzahl an Trennwänden (3), wobei
zwischen zwei Trennwänden (3) eine Batteriezelle (2) angeordnet ist, und
zwischen einer ersten Batteriezelle (2) und einer zu der ersten Batteriezelle (2) benachbarten Trennwand (3) ein erstes Ausgleichselement (7) angeordnet ist und zwischen einer zweiten Batteriezelle (2) und einer zu der zweiten Batteriezelle (2) benachbarten Trennwand (3) ein zweites Ausgleichselement (7) angeordnet ist,
**dadurch gekennzeichnet, dass**
das erste Ausgleichselement (7) und das zweite Ausgleichelement (7) einen unterschiedlichen Wert (9) einer Verformungskonstante aufweisen, wobei das Batteriemodul (1) eine Mehrzahl an Ausgleichselementen (7) aufweist, wobei das Batteriemodul (1) in einer Längsrichtung (10) einen ersten Bereich (12) und einen zweiten Bereich (13) aufweist,
**dadurch gekennzeichnet, dass**
die Werte (9) der Verformungskonstanten der Ausgleichselemente (7) in dem ersten Bereich (12) in der Längsrichtung (10) des Batteriemoduls (1) abnehmen und/oder in dem zweiten Bereich (13) in der Längsrichtung (10) des Batteriemoduls (1) zunehmen.

2. Batteriemodul nach dem vorhergehenden Anspruch 1, wobei
das Ausgleichselement (7) in der Art ausgebildet ist, dass der Wert (9) einer Verformungskonstanten über das gesamte Ausgleichelement (7) hinweg konstant ist.

3. Batteriemodul nach einem der vorhergehenden Ansprüche,
**dadurch gekennzeichnet, dass**
zwei Trennwände (3) in der Art durch ein Verspannelement miteinander verbunden sind, dass eine Kraft zum Verpressen einer zwischen den zwei Trennwänden (3) angeordneten Batteriezelle (2) übertragen wird oder dass
das Batteriemodul (1) zumindest einen zwei Trennwände (2) umfassenden Aufnahmeraum (4) ausbildet, wobei die zwei Trennwände (2) eines Aufnahmeraumes (4) für die Batteriezellen (2) durch zumindest eine weitere Gehäusewand (4) miteinander verbunden sind.

4. Batteriemodul nach einem der vorhergehenden Ansprüche, wobei
zwei benachbarte Trennwände (3) jeweils in einer Längsrichtung (10) des Batteriemoduls (1) mit ihren größten Seitenflächen benachbart zueinander und durch einen Abstand (6) voneinander beabstandet angeordnet, wobei
die Batteriezellen (2) jeweils prismatisch ausgebildet sind und nebeneinander in der Längsrichtung (10) des Batteriemoduls (1) mit ihren größten Seitenflächen benachbart zueinander angeordnet sind.

5. Batteriemodul nach einem der vorhergehenden Ansprüche,
**dadurch gekennzeichnet, dass** die Verformungskonstante eine Federkonstante, ein Elastizitätsmodul, ein Kompressionsmoduloder eine geometrische Größe ist.

6. Batteriemodul nach dem vorhergehenden Anspruch 1, **dadurch gekennzeichnet, dass** der erste Bereich (12) und der zweite Bereich (13) in der Art angepasst ist,
dass während des Betriebes die Werte (8) der Temperatur der Batteriezellen (2) in dem ersten Bereich (12) zunehmen und/oder in dem zweiten Bereich (13) abnehmen.

7. Batterie mit einem Batteriemodul nach einem der Ansprüche 1 bis 6.

8. Verfahren zur Herstellung eines Batteriemoduls nach einem der Ansprüche 1 bis 6, wobei
in einem ersten Schritt ein Wert (8) einer Temperatur einer Batteriezelle (2) für den Betrieb des Batteriemoduls (1) bestimmt wird und
in einem zweiten Schritt Ausgleichselemente (7) in dem Batteriemodul (1) derart angeordnet werden, dass ein Ausgleichselement (7) einen kleineren Wert (9) einer Verformungskonstanten im Vergleich zu einem in einer Längsrichtung (10) des Batteriemoduls (1) vorhergehenden Ausgleichselement (7) aufweist, wenn die bestimmte Temperatur einer Batteriezelle (2), welche zwischen denselben zwei Trennwänden (3) angeordnet ist wie das Ausgleichselement (7), größer ist als die Temperatur einer Batteriezelle (2), welche zwischen denselben zwei Trennwänden (3) angeordnet ist wie das vorhergehende Ausgleichselement (7) und/oder
dass ein Ausgleichselement (7) einen größeren Wert (9) einer Verformungskonstanten im Vergleich zu einem in einer Längsrichtung (10) des Batteriemoduls (1) vorhergehenden Ausgleichselement (7) aufweist, wenn die bestimmte Temperatur einer Batteriezelle (2), welche zwischen denselben zwei Trennwänden (3) angeordnet ist wie das Ausgleichselement (7), kleiner ist als die Temperatur einer Batteriezelle (2), welche zwischen denselben zwei Trennwänden (3) angeordnet ist wie das vorhergehende Ausgleichselement (7).

## Claims

1. Battery module having a plurality of battery cells, in particular lithium ion battery cells,
comprising a plurality of partition walls (3), wherein
a battery cell (2) is arranged between two partition walls (3) and a first compensating element (7) is arranged between a first battery cell (2) and a partition wall (3) that is adjacent to the first battery cell (2), and a second compensating element (7) is arranged between a second battery cell (2) and a partition wall (3) that is adjacent to the second battery cell (2), **characterized in that**
the first compensating element (7) and the second compensating element (7) comprise a different value (9) of a deformation constant, wherein
the battery module (1) comprises a plurality of compensating elements (7), wherein the battery module (1) comprises in a longitudinal direction (10) a first region (12) and a second region (13),
**characterized in that**
the values (9) of the deformation constants of the compensating elements (7) decrease in the first region (12) in the longitudinal direction (10) of the battery module (1) and/or increase in the second region (13) in the longitudinal direction (10) of the battery module (1) .

2. Battery module according to the preceding Claim 1, wherein
the compensating element (7) is configured in such a manner that the value (9) of a deformation constant is constant over the entire compensating element (7).

3. Battery module according to any one of the preceding claims,
**characterized in that**
two partition walls (3) are connected to one another by means of a bracing element in such a manner that a force is transmitted for pressing against a battery cell (2) that is arranged between the two partition walls (3) or that
the battery module (1) forms at least one receiving chamber (4) that comprises two partition walls (2), wherein the two partition walls (2) of a receiving chamber (4) for the battery cells (2) are connected to one another by means of at least a further housing wall (4) .

4. Battery module according to any one of the preceding claims, wherein
two adjacent partition walls (3) are arranged adjacent to one another with their largest side faces respectively in a longitudinal direction (10) of the battery module (1) and spaced apart from one another by means of a spacing (6), wherein
the battery cells (2) are configured respectively in a prismatic manner and are arranged adjacent to one another side-by-side with their largest side faces in a longitudinal direction (10) of the battery module (1).

5. The battery module according to any one of the preceding claims,
**characterized in that**
the deformation constant is a spring constant, an elastic modulus, a surface pressure modulus or a geometric variable.

6. Battery module according to the preceding Claim 1, **characterized in that**
the first region (12) and the second region (13) are adjusted in such a manner that during the operation the values (8) of the temperature of the battery cells (2) increase in the first region (12) and/or decrease in the second region (13).

7. Battery having a battery module according to any one of Claims 1 to 6.

8. Method for producing a battery module according to any one of Claims 1 to 6,
wherein
in a first step a value (8) of a temperature of a battery cell (2) is determined for the operation of the battery cell (1) and
in a second step compensating elements (7) are arranged in the battery module (1) in such a manner that one compensating element (7) has a lower value (9) of a deformation constant in comparison to a compensating element (7) that is preceding in a longitudinal direction (10) of the battery module (1) if the determined temperature of a battery cell (2) that is arranged between the same two partition walls (3) as the compensating element (7) is higher than the temperature of a battery cell (2) that is arranged between the same two partition walls (3) as the preceding compensating element (7) and/or
that a compensating element (7) has a higher value (9) of a deformation constant in comparison to a compensating element (7) that is preceding in a longitudinal direction (10) of the battery module (1) if the determined temperature of a battery cell (2) that is arranged between the same two partition walls (3) as the compensating element (7) is lower than the temperature of a battery cell (2) that is arranged between the same two partition walls (3) as the preceding compensating element (7).

## Revendications

1. Module de batterie comprenant une pluralité de cellules de batterie, notamment des cellules de batterie aux ions de lithium,
comprenant une pluralité de parois de séparation (3), une cellule de batterie (2) étant disposée entre deux parois de séparation (3) et
un premier élément de compensation (7) étant disposé entre une première cellule de batterie (2) et une paroi de séparation (3) voisine de la première cellule de batterie (2) et
un deuxième élément de compensation (7) étant disposé entre une deuxième cellule de batterie (2) et une paroi de séparation (3) voisine de la deuxième cellule de batterie (2),
**caractérisé en ce que**
le premier élément de compensation (7) et le deuxième élément de compensation (7) possèdent une valeur différente (9) d'une constante de déformation,
le module de batterie (1) possédant une pluralité d'éléments de compensation (7),
le module de batterie (1) possédant une première zone (12) et une deuxième zone (13) dans une direction longitudinale (10),
**caractérisé en ce que**
les valeurs (9) des constantes de déformation des éléments de compensation (7) dans la première zone (12) dans la direction longitudinale (10) du module de batterie (1) diminuent et/ou augmentent dans la deuxième zone (13) dans la direction longitudinale (10) du module de batterie (1).

2. Module de batterie selon la revendication 1 précédente, l'élément de compensation (7) étant configuré de telle sorte que la valeur (9) d'une constante de déformation est constante sur la totalité de l'élément de compensation (7).

3. Module de batterie selon l'une des revendications précédentes, **caractérisé en ce que**
deux parois de séparation (3) sont reliées l'une à l'autre par un élément de haubanage de telle sorte qu'une force de compression d'une cellule de batterie (2) disposée entre les deux parois de séparation (3) est transmise ou **en ce que**
le module de batterie (1) forme au moins un espace d'accueil (4) comportant deux parois de séparation (2), les deux parois de séparation (2) d'un espace d'accueil (4) pour les cellules de batterie (2) étant reliées l'une à l'autre par au moins une paroi de boîtier (4) supplémentaire.

4. Module de batterie selon l'une des revendications précédentes,
deux parois de séparation (3) voisines respectivement dans une direction longitudinale (10) du module de batterie (1) étant disposées voisines l'une de l'autre par leurs surfaces latérales les plus grandes et espacées l'une de l'autre par un écart (6),
les cellules de batterie (2) étant chacune de configuration prismatique et disposées les unes à côté des autres dans la direction longitudinale (10) du module de batterie (1) voisines par leurs surfaces latérales les plus grandes.

5. Module de batterie selon l'une des revendications précédentes, **caractérisé en ce que** la constante de déformation est une constante de ressort, un module d'élasticité, un module de compression ou une grandeur géométrique.

6. Module de batterie selon la revendication 1 précédente, **caractérisé en ce que** la première zone (12) et la deuxième zone (13) sont adaptées de telle sorte que pendant le fonctionnement, les valeurs (8) de la température des cellules de batterie (2) augmentent dans la première zone (12) et/ diminuent dans la deuxième zone (13) .

7. Batterie comprenant un module de batterie selon l'une des revendications 1 à 6.

8. Procédé de fabrication d'un module de batterie selon l'une des revendications 1 à 6, procédé selon lequel dans une première étape, une valeur (8) d'une température d'une cellule de batterie (2) pour le fonctionnement du module de batterie (1) est déterminée et
dans une deuxième étape, des éléments de compensation (7) sont disposés dans le module de batterie (1) de telle sorte qu'un élément de compensation (7) possède une valeur (9) plus petite d'une constante de déformation en comparaison d'un élément de compensation (7) précédent dans une direction longitudinale (10) du module de batterie (1) lorsque la température déterminée d'une cellule de batterie (2) qui est disposée entre les deux mêmes parois de séparation (3) que l'élément de compensation (7) est supérieure à la température d'une cellule de batterie (2) qui est disposée entre les deux mêmes parois de séparation (3) que l'élément de compensation (7) précédent et/ou
qu'un élément de compensation (7) possède une valeur (9) plus élevée d'une constante de déformation en comparaison d'un élément de compensation (7) précédent dans une direction longitudinale (10) du module de batterie (1) lorsque la température déterminée d'une cellule de batterie (2) qui est disposée entre les deux mêmes parois de séparation (3) que l'élément de compensation (7) est inférieure à la température d'une cellule de batterie (2) qui est disposée entre les deux mêmes parois de séparation (3) que l'élément de compensation (7) précédent.
